# EUROPÄISCHE PATENTSCHRIFT

(11) **EP 0 664 240 B1**
(45) Veröffentlichungstag und Bekanntmachung des Hinweises auf die Patenterteilung: **12.03.1997**
(21) Anmeldenummer: 94120777.1
(22) Anmeldetag: 27.12.1994
(51) Int. Cl.: B60R 1/06

(54) **Aussenrückblickspiegel für Kraftfahrzeuge**
Exterior rear view mirror for vehicles
Rétroviseur extérieur pour véhicules

(30) Priorität: 21.01.1994 DE 4401633
(43) Veröffentlichungstag der Anmeldung: 26.07.1995
(73) Patentinhaber: Mittelhäuser, Bernhard, D-30900 Wedemark (DE)
(72) Erfinder: Mittelhäuser, Bernhard, D-30900 Wedemark (DE)
(74) Vertreter: Depmeyer, Lothar

(56) Entgegenhaltungen:
- EP-A- 0 064 815
- DE-A- 3 440 477
- DE-B- 2 927 936

## Beschreibung

Die Erfindung betrifft einen Aussenrückblickspiegel für Kraftfahrzeuge mit einem zur verstellbaren Lagerung der Spiegelscheibe dienenden Gehäuse, das um eine zumindest in etwa senkrechte Achse verschwenkbar und in Fahrzeuglängsrichtung gesehen nach vorne und/oder hinten abklappbar ist, wobei die Verstellung der Spiegelscheibe durch ein in das Fahrzeuginnere reichendes Gestänge erfolgt, das eine zwei Hebel des Gestänges verbindende Kupplung aufweist, die durch eine Gehäuseverschwenkung betätigbar ist.

Bei bekannten Spiegeln dieser Art sind die beiden Kupplungshälften als Kugelschalen ausgeführt, die als durch Federn zusammengedrückte Elemente ausgebildet und konzentrisch zur Schwenkachse des Gehäuses angeordnet sind. Demgemäss setzt eine solche Kupplung eine Anordnung an der Schwenkachse voraus, und eine Betätigung der Kupplung kann auch nur erfolgen, wenn eine Verdrehung der Kupplungshälften in Bezug auf die Schwenkachse stattfindet.

Ein Aussenrückblickspiegel gemäß dem Oberbegriff des Anspruchs 1 ist aus EP-A-0 064 815 bekannt.

Der Erfindung liegt die Aufgabe zugrunde, Gestängekupplungen auch für solche Spiegel vorzusehen, bei denen das Verstellgestänge nicht mit der Schwenkachse verbunden bzw. im Abstand davon angeordnet ist.

Zur Lösung dieser Aufgabe ist erfindungsgemäss das verschwenkbare Gehäuse mit einem Stellglied versehen, das auf die Halterung des am Spiegelfuss gelagerten Hebels im Sinne eines Versatzes zur Betätigung der Kupplung einwirkt. Zweckmässigerweise ist dieses Stellglied eine Nocken- oder Kurvenscheibe , der bzw. die mit einer Verschwenkung des Gehäuses eine entsprechende Verstellbewegung erfährt. Dementsprechend wird die Halterung für den Hebel verstellt. Damit wird dann die gewünschte Entkupplung erreicht bzw. ein vorher vorhandener Formschluss zwischen den beiden Hebeln aufgehoben.

Mit der Entkopplung kann ungehindert die gewünschte Abklappbewegung des Gehäuses z.B. in eine Parkstellung bzw. in die entgegengesetzte Richtung erfolgen, sollte das Gehäuse auf ein Widerlager oder ein Hindernis aufgetroffen sein. Mit einem Zurückklappen des Gehäuses in die Wirkstellung des Spiegels werden die beiden Hebel wieder miteinander verkuppelt, wobei dann zweckmässigerweise eine Rastung wirksam wird, um die Wirkstellung des Gehäuses rüttelsicher festzulegen.

Weitere Einzelheiten der Erfindung werden anhand der Zeichnung erläutert, in der ein Ausführungsbeispiel der Erfindung dargestellt ist. Es zeigen :
- Fig. 1: einen Aussenrückblickspiegel in z.T. schematischer Wiedergabe in Richtung auf die Spiegelscheibe gesehen teilweise im senkrechten Schnitt,
- Fig. 2: einen Teilschnitt nach der Linie II - II von Fig. 1 und

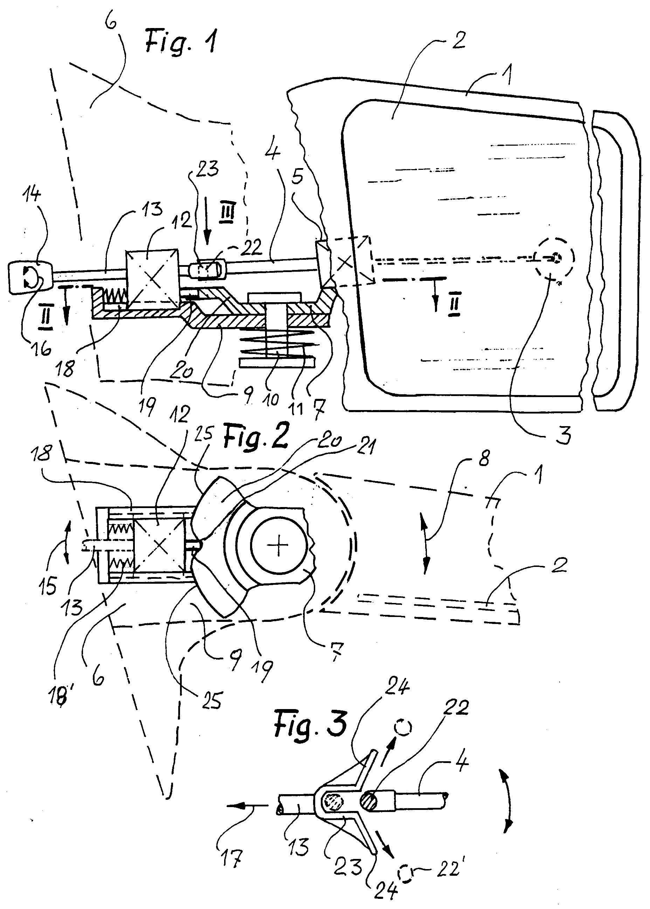

- Fig. 2: eine Teilansicht aus Fig. 1 in Richtung des Pfeiles III gesehen.

In einem im wesentlichen schalenförmigen Gehäuse 1 befindet sich die Spiegelscheibe 2, sie ist über ein bei 3 angedeutetes Kugelgelenk verstellbar gelagert. Die Verstellung erfolgt durch einen Doppelhebel 4,dessen Halterung mittels eines Kugelgelenks 5 geschieht, das fest mit dem Gehäuse 1 verbunden ist. Dieses läuft zum Fuss 6 des Spiegels hin in eine etwa waagerechte Platte 7 aus, die zur verschwenkbaren Lagerung des Gehäuses 1 mit Spiegelscheibe 2 im Sinne des Doppelpfeiles 8 dient. Aus diesem Grunde ruht die Platte 7 auf einer plattenförmigen Halterung 9 des Fusses 6. Dazu ist ein Lagerbolzen 1o mit Andrückfeder 11 vorgesehen.

Auf der plattenförmigen Halterung 9 ist ferner ein Kugelgelenk 12 gelagert, das zur Halterung eines weiteren Hebels 13 dient, der ebenso wie der Hebel 4 als Doppelhebel ausgeführt ist. Der Hebel 13 ragt mit seinem freien Ende in das Innere des Fahrzeuges hinein und ist dort mit einer Handhabe 14 versehen.

Die beiden Hebel 4 und 13 sind über die Kugelgelenke 5 und 12 so gelagert und über die Kupplung gemäss Fig. 3 so miteinander verbunden, dass durch eine Betätigung der Handhabe 14 im Sinne des Doppelpfeiles 15 und des Drehpfeiles 16 die erwünschten Verstellungen des Spiegelglases 2 erreicht werden können ( Neigungen um eine waagerechte und eine senkrechte Achse ).

Es versteht sich, dass ein Abklappen des Gehäuses 1 im Sinne des Doppelpfeiles 8 durch die Kupplung gemäss Fig. 3 behindert wird; um aber dennoch weite Schwenkungen des Gehäuses 1 zu ermöglichen, ist das Kugelgelenk 12 zur verschiebbaren Lagerung im Sinne des Pfeiles 17 unten in einer Schwalbenschwanzführung 18 gelagert. Es sind Druckfedern 18'vorgesehen, die versuchen, das Kugelgelenk 12 mit einem vorne angebrachten Stössel 19 an die Stirnfläche der Kurvenscheibe 20 der Platte 7 anzudrücken.

Dieser Stössel 19 befindet sich in der Wirkstellung des Gehäuses 1 gemäss Fig. 1 und 2 in einer Vertiefung 21 der Kurvenscheibe 20. In dieser Stellung befindet sich das mit einem Bolzen 22 ausgestattete Ende des Hebels 4 in einer Klaue 23 des Hebels 13, um so einen Formschluss herbeizuführen und die Bewegungen der Handhabe 14 im Sinne der Pfeile 15, 16 übertragen zu können. Die Klaue 23 ist zudem zu beiden Seiten mit v-förmig anstehenden Fangschenkeln 24 versehen. ( Der Bolzen 22 befindet sich im eingekuppelten Zustand innerhalb der Klaue 23, er ist gestrichelt dargestellt. )

Erfolgt ein Abklappen des Gehäuses 1, so wird damit auch die Kurvens-cheibe 20 verschwenkt. Der Stössel 19 gelangt von der Vertiefung 21 auf den vorspringenden Abschnitt 25 der Kurvens-cheibe 20, womit das Kugelgelenk 12 gegen die Federwirkung zurückgedrängt und damit der Bolzen 22 gemäss Fig. 3 ins Freie geführt wird. In dieser Stellung kann dann die Verschwenkung des Gehäuses 1 ohne Behinderung durch die Klaue 23 stattfinden.

Beim Zurückklappen des Gehäuses 1 in die Normalstellung gelangt der Stössel 19 über den Abschnitt 25 in die Vertiefung 21. Damit werden die beiden Hebel 4, 13 wieder miteinander verbunden, da die Klaue 23 den Bolzen 22 aufgenommen hat und die formschlüssige Verbindung wieder hergestellt ist.

Da die Kurvenscheibe 20 symmetrisch ausgebildet ist, treten die obigen Wirkungen ein gleichgültig, ob ein Abklappen des Gehäuses 1 in Bezug auf das Fahrzeug nach vorne oder nach hinten erfolgt.

Im abgeklappten Zustand des Gehäuses 1 nimmt der Bolzen 22 ( in Fig. 3 mit 22' gekennzeichnet ) im Vergleich zur Kupplungshälfte ( Klaue 23 ) die dort aufgezeigte Stellung ein, während die voll ausgezogene Bolzenwiedergabe zusammen mit dem Hebel 4 den ausgekuppelten Zustand schlechthin wiedergibt. Hat der Bolzen 22 also die Abschnitte 25 erreicht, so hat der Bolzen die Klaue 23 verlassen.

Die erfindungsgemässe,automatisch wirkende Kupplungseinrichtung hat den grossen Vorteil, dass die Gestänge- und Hebelanordnung und die Hebelausbildung von der Gestaltung und der Lage des Bolzens 22 unabhängig sind.

Im übrigen richtet sich die Ausbildung der Halterungen 5 und 12 nach der gewünschten Gestängefunktion zur Betätigung der Spiegelscheibe 3.

## Patentansprüche

1. Aussenrückblickspiegel für Kraftfahrzeuge mit einem zur verstellbaren Lagerung der Spiegelscheibe dienenden Gehäuse, das um eine zumindest in etwa senkrechte Achse in Fahrzeuglängsrichtung gesehen nach vorne und/oder nach hinten verschwenkbar ist, wobei die Verstellung der Spiegelscheibe durch ein in das Innere des Fahrzeuges reichendes Gestänge erfolgt, das eine zwei Hebel verbindende Kupplung aufweist, von denen der eine Hebel am Spiegelfuss und der andere Hebel am Gehäuse gehaltert ist, dadurch gekennzeichnet, dass das Gehäuse (1) mit einem Stellglied (20) versehen ist, das bei einer Gehäuseverschwenkung auf die Halterung (12) des am Spiegelfuss (6) gelagerten Hebels (13) im Sinne eines Versatzes zur Betätigung der Kupplung (23) einwirkt.

2. Spiegel nach Anspruch 1, dadurch gekennzeichnet, dass das Stellglied eine Nocken- oder Kurvenscheibe (2o) ist, die mit der Gehäuseverschwenkung eine Verstellbewegung erfährt, die auf einen mit der Halterung (12) verbundenen Stössel (20) einwirkt.

3. Spiegel nach Anspruch 2, dadurch gekennzeichnet, dass die Halterung (12) gegen eine Rückstellkraft (18') bewegbar ist.

4. Spiegel nach Anspruch 2, dadurch gekennzeichnet, dass der Stössel (19) in der Wirkstellung des Gehäuses (1) ( Normalstellung des Gehäuses ) in eine Vertiefung (21) der Kurvenscheibe (20) eingreift.

5. Spiegel nach Anspruch 1, dadurch gekennzeichnet, dass die Kupplung eine Klauenkupplung und der Versatz grösser ist als die wirksame Klauentiefe.

6. Spiegel nach Anspruch 4, dadurch gekennzeichnet, dass die Kurvenscheibe (20) in Bezug auf die Vertiefung (21) symmetrisch ausgeführt ist.

7. Spiegel nach Anspruch 2, dadurch gekennzeichnet, dass das Gehäuse (1) mit einer von einem Schwenkbolzen ( Lagerbolzen 10 ) durchsetzten Platte (7) versehen ist, die auf der der Spiegelscheibe (2) abgekehrten Seite eine Nocken- bzw. Kurvenscheibe (20) aufweist.

## Claims

1. External rear-view mirror for automotive vehicles, having a housing, which is used for the adjustable mounting of the mirror glass and is forwardly and/or rearwardly pivotable about an axis which is at least substantially perpendicular when viewed with respect to the longitudinal direction of the vehicle, the adjustment of the mirror glass being effected by a rod linkage, which extends into the interior of the vehicle and has a coupling connecting two levers, one of the levers being supported on the mirror base and the other lever being supported on the housing, characterised in that the housing (1) is provided with an adjusting member (20), which acts upon the mounting support (12) for the lever (13), mounted on the mirror base (6), in the sense of a displacement, in the event of a pivotal movement of the housing, in order to actuate the coupling (23).

2. Mirror according to claim 1, characterised in that the adjusting member is a cam plate (20), which experiences, with the pivotal movement of the housing, an adjustment movement which acts upon a push rod (19), which is connected to the support (12).

3. Mirror according to claim 2, characterised in that the support (12) is displaceable in opposition to a restoring force (18').

4. Mirror according to claim 2, characterised in that, in the operative position of the housing (1) (normal position of the housing), the push rod (19) engages in an indentation (21) in the cam plate (20).

5. Mirror according to claim 1, characterised in that the coupling is a claw coupling, and the displacement is greater than the active claw depth.

6. Mirror according to claim 4, characterised in that the cam plate (20) is symmetrically configured relative to the indentation (21).

7. Mirror according to claim 2, characterised in that the housing (1) is provided with a plate (7), which is traversed by a pivot bolt (bearing bolt 10) and has a cam plate (20) on the side remote from the mirror glass (2).

## Revendications

1. Rétroviseur extérieur de véhicule automobile, comprenant un boîtier servant à monter le miroir de manière à pouvoir l'orienter et pouvant basculer vers l'avant et/ou vers l'arrière vu dans la direction longitudinale du véhicule, par rapport à un axe au moins à peu près vertical, l'orientation du miroir s'effectuant par une tringlerie allant jusqu'à l'intérieur du véhicule et comportant un dispositif d'accouplement reliant deux leviers dont l'un est fixé à l'embase du rétroviseur et l'autre au boîtier, caractérisé en ce que le boîtier (1) est muni d'un organe (20) de réglage, qui agit, lors d'un basculement du boîtier, sur la pièce (12) de fixation du levier (13) monté sur l'embase (6) du rétroviseur en vue d'un déplacement pour l'actionnement du dispositif (23) d'accouplement.

2. Rétroviseur suivant la revendication 1, caractérisé en ce que l'organe de réglage est une came disque ou une came à coulisse (20), qui prend, par le basculement du boîtier, un mouvement d'orientation agissant sur un poussoir (20) relié à la pièce (12) de fixation.

3. Rétroviseur suivant la revendication 2, caractérisé en ce que la pièce (12) de fixation est mobile à l'encontre d'une force (18') de rappel.

4. Rétroviseur suivant la revendication 2, caractérisé en ce que le poussoir (19) pénètre en la position active du boîtier (1) (position normale du boîtier) dans un évidement (21) de la came (20) disque.

5. Rétroviseur suivant la revendication 1, caractérisé en ce que le dispositif d'accouplement est un accouplement à griffe et le déplacement est supérieur à la profondeur efficace de la griffe.

6. Rétroviseur suivant la revendication 4, caractérisé en ce que la came (20) à coulisse est symétrique par rapport à la cavité (21).

7. Rétroviseur suivant la revendication 2, caractérisé en ce que le boîtier (1) est muni d'un plateau (7) traversé par un axe de basculement (axe 10 de palier), qui comporte une came (20) disque ou une came à coulisse du côté éloigné du miroir (2).
